# EUROPÄISCHE PATENTSCHRIFT

(11) **EP 2 810 547 B1**
(45) Veröffentlichungstag und Bekanntmachung des Hinweises auf die Patenterteilung: **09.11.2016**
(21) Anmeldenummer: 14166665.1
(22) Anmeldetag: 30.04.2014
(51) Int. Cl.: A01D 34/00, A01D 34/73

(54) **Messer für ein Sichelmähwerk und Sichelmähwerk**
Blade for a sickle mower and sickle mower
Lame de faucheuse et faucheuse

(30) Priorität: 29.05.2013 DE 102013105523
(43) Veröffentlichungstag der Anmeldung: 10.12.2014
(73) Patentinhaber: Schell GmbH, 52076 Aachen (DE)
(72) Erfinder: Schell, Franz-Josef, 52076 Aachen (DE); Schell, Oliver, 52076 Aachen (DE)
(74) Vertreter: Kohlmann, Kai

(56) Entgegenhaltungen:
- DE-C1- 4 434 272
- US-A- 3 389 541

## Beschreibung

Die Erfindung betrifft ein Messer für ein Sichelmähwerk nach dem Oberbegriff des Anspruchs 1.

Außerdem betrifft die Erfindung ein Sichelmähwerk.

Sichelmähwerke werden häufig bei der Landschaftspflege großer Grünflächen eingesetzt. Kommunale und gewerbliche Betriebe der Landschaftspflege stehen bei der Pflege unter hohem Kostendruck. Gleichzeitig steigen die Ansprüche an den Pflegequalitätsstandard der Grünflächen. Aus diesem Grund besteht das Bedürfnis, dass selbst bei lang gewachsenem Schnittgut auf eine niedrige Höhe abgeschnitten werden kann, ohne dass das Schnittgut entfernt werden muss. Hierzu ist es erforderlich, dass das Schnittgut von dem Messer des Sichelmähwerks nicht nur abgeschnitten, sondern auch effektiv nachzerkleinert wird. Des Weiteren sind lange Wechselintervalle der Messer für eine wirtschaftliche Landschaftspflege von besonderer Bedeutung.

Aus der DE 44 34 272 C1 ist ein Sichelmähwerk mit Zerkleinerungswirkung bekannt. In den nebeneinander angeordneten Mähgehäusen rotiert jeweils ein zweiflügeliges Messer, das drehfest mit einer vertikalen Antriebswelle verbunden ist, von der sich die Messerflügel in beide Richtungen erstrecken. Eine in Rotationsrichtung vordere Kante der Messerflügel ist zu einer Schneide geschliffen. Ein hinterer Randbereich jeweils eines Messerflügels ist als Leiteinrichtung schräg nach oben gebogen, während ein hinterer Randbereich des jeweils anderen Messerflügels schräg nach unten gebogen ist. Diese Leiteinrichtungen wirbeln bei der Rotation des Messers das Schnittgut auf bzw. drücken das Schnittgut wieder nach unten. Das Schnittgut gelangt dadurch nach dem Abschneiden mehrfach wieder in den Bereich der Schneiden und wird dabei nachzerkleinert.

Die EP 1 415 525 A1 offenbart ein Messer für ein Sichelmähwerk umfassend zwei um eine Rotationsachse rotierbare Messerflügel, die sich radial nach außen erstrecken. Jeder Messerflügel weist an einer in Rotationsrichtung vorderen Kante eine Schneide auf. An einer in Rotationsrichtung hinteren Kante befindet sich eine Leiteinrichtung, die von einem abgebogenen Abschnitt des Messerflügels gebildet wird. Das Messer unterteilt sich in zwei Schneidbereiche, einen Anschlussbereich zum Anschluss des Messers an die Antriebswelle sowie zwei zwischen den Schneidbereichen und dem Anschlussbereich angeordneten Verformungsbereichen, die sich beim Auftreffen des Messers auf ein Hindernis verformen können, um eine Beschädigung des Antriebs zu verhindern. Der Anschlussbereich liegt höher als die Schneidbereiche und die Verformungsbereiche weisen eine nach unten offene U-Form in Kuppelgestalt auf. Die relativ kleinen Leiteinrichtungen erzeugen eine Luftströmung, die das Schnittgut während des Betriebs des Mähwerks anhebt. Die Biegelinien der beiden Leiteinrichtungen schließen mit der Längsachse des Messers einen Winkel von etwa 25 - 30 Grad ein, woraus sich ausgehend vom äußeren Rand des Messerflügels in Richtung der Rotationsachse eine relativ kurze Längserstreckung der Leiteinrichtung und damit eine inhomogene Ausbildung der Strömung ergibt.

Die US 5 210 998 A offenbart ein Schneidmesser für ein Sichelmähwerk, mit zwei um eine Rotationsachse rotierbaren Messerflügeln, die sich zu beiden Seiten von der Rotationsachse radial in Richtung einer Längsachse des Messers nach außen erstrecken. Die vordere Kante jedes Messerflügels ist als Schneidkante ausgebildet. An der in Rotationsrichtung hinteren Kante jedes Messerflügels ist eine Leiteinrichtung angeordnet. Zwischen der Rotationsachse des Schneidmessers und der nach oben weisenden Leiteinrichtung ist ein erhabener Abschnitt des Messerflügels angeordnet, der an einer in Rotationsrichtung hinteren Kante eine weitere nach unten abgewinkelte Leiteinrichtung aufweist. Die Biegelinie der nach oben gebogenen Leiteinrichtungen und die Längsachse des Messers schließen einen Winkel von etwa 25 Grad ein. In Folge dessen ergibt sich eine relativ kurze Längserstreckung der nach oben abgebogenen Leiteinrichtungen vom äußeren Rand des Messerflügels in Richtung der Rotationsachse. In Folge dessen stellen sich keine optimalen und gleichmäßigen Strömungsverhältnisse zur Ausbildung der Sogwirkung durch die rotierenden Messer ein. Durch die zusätzlichen, nach unten abgebogene Leiteinrichtungen wird das von der äußeren Leiteinrichtungen aufgewirbelte Schnittgut in diesem Bereich wieder nach unten gedrückt.

Probleme ergeben sich bei den bekannten zweiflügeligen Messern durch die relativ kurze Standzeit von etwa 100 Betriebsstunden. Nach dieser Standzeit müssen die Messer ausgetauscht werden. Dieser Austausch verursacht hohe Personal- und damit Betriebskosten der mit den herkömmlichen Messern ausgerüsteten Sichelmähwerke.

Die US 3 389 541 A offenbart ein gattungsfremdes Messer aus elastomerem Material für einen Rasenmäher für den Heimgebrauch umfassend zwei um eine Rotationsachse rotierbare Messerflügel, die sich zu beiden Seiten von der Rotationsachse radial nach außen erstrecken. Durch das elastomere Materail soll die Verletzungsgefahr von Personen, die mit dem sich mit bis zu 3.600 Umdrehungen pro Minute drehenden Messer in Kontakt gelangen, reduzieret werden. An einer in Rotationsrichtung vorderen Kante jedes Messerflügels befindet sich eine Schneide. Gegenüberliegend der Schneiden sind Leiteinrichtungen an der in Rotationsrichtung hinteren Kante jedes Messerflügels, die aus der Flügelebene um eine Biegelinie abgebogen sind. Die Leiteinrichtungen erzeugen eine Sogwirkung, die das Gras aufrichtet. Äußere Abschnitte der Messerflügel sind breiter als ein jeweils an den äußeren Abschnitt angrenzender innerer Abschnitt. Die Biegelinie für die Leiteinrichtungen schließt mit der Längsachse des Messers einen spitzen Winkel ein und schneidet die Kante es Messerflügels am Übergang des äußeren Abschnitts zum inneren Abschnitt.

Ausgehend von diesem Stand der Technik liegt der Erfindung die Aufgabe zugrunde, ein Messer für ein Sichelmähwerk mit guter Nachzerkleinerung des Schnittgutes bei geringerer Rotationsgeschwindigkeit zu schaffen, das eine längere Standzeit aufweist und zugleich eine übermäßige Geräuschentwicklung durch das Messer vermeidet.

Außerdem soll ein wirtschaftlicher zu betreibendes Sichelmähwerk vorgeschlagen werden.

Diese Aufgabe wird bei einem Messer für ein Sichelmähwerk nach dem Oberbegriff des Anspruchs 1 dadurch gelöst, dass
- die nach oben weisenden Oberflächen (11 a, 12 a) der beiden Leiteinrichtungen (11, 12) zusammen mindestens 12 % und höchstens 20 % der Fläche der gesamten nach oben weisenden Oberfläche des Messers (1) betragen,
- sich die Schneide (6, 7) jedes Messerflügels (3, 4) ausschließlich entlang der Vorderkante (3a, 3 b) in dem äußeren Abschnitt (8) des Messerflügels (3, 4) erstreckt und
- die Biegelinie (13 a, 13 b) der Leiteinrichtung (11, 12) jedes Messerflügels (3, 4) die hintere Kante (3 b, 4 b) im äußeren Abschnitt (8) des Messerflügels (3, 4) schneidet.

Indem die Messerflügel in dem höher belasteten äußeren Abschnitt breiter als in dem inneren Abschnitt ausgeführt sind, wird die Standzeit verlängert und die Stabilität in diesem hoch belasteten Bereich erhöht, ohne die Masse des Messers unnötig zu vergrößern. Die mit 12 % der Gesamtfläche deutlich vergrößerte Fläche der beiden Leiteinrichtungen bewirkt in Verbindung mit deren gleichgerichteter, ausschließlicher Orientierung nach oben, dass die Aufwirbelung des Schnittgutes und dessen Nachzerkleinerung erheblich verbessert wird. Um eine übermäßige Geräuschentwicklung durch das Messer zu vermeiden, betragen die nach oben weisenden Oberflächen der beiden Leiteinrichtungen zusammen jedoch höchstens 20 % der Fläche der gesamten nach oben weisenden Oberfläche des Messers.

Die Standzeit der Messer wird dadurch erhöht, dass sich die Schneide jedes Messerflügels ausschließlich entlang der Vorderkante in dem äußeren Abschnitt des Messerflügels erstreckt. Hierdurch wird die durch die Schneiden verursachte Kerbwirkung am Schneidenende und damit die Bruchgefahr des Messers reduziert. Die Biegelinie verläuft dabei von einem äußeren Rand des Messerflügels und schneidet die hintere Kante im äußeren Abschnitt.

Um die Standzeit des Messers weiter zu verlängern, kann in einer Ausgestaltung der Erfindung die Schneide gegenüber dem übrigen Verlauf der vorderen Kante des Messers hervorstehen. Die Biegelinien der beiden Leiteinrichtungen und die Längsachse des Messers schließen einen spitzen Winkel in einem Bereich von 10 - 15°, vorzugsweise 12°, ein. Der spitze Winkel der Biegelinie in dem angegebenen Bereich führt in Verbindung mit der relativ großen Fläche der Leiteinrichtung zu einer großen Längserstreckung der Leiteinrichtung vom äußeren Rand des Messerflügels in Richtung der Rotationsachse und dadurch zu optimalen Strömungsverhältnissen zur Ausbildung der Sogwirkung durch das rotierende Messer. Die große Längserstreckung der Leiteinrichtungen bewirkt eine gleichmäßige Sogwirkung über die Längsachse des Messers. Die gleichmäßige Sogwirkung wird erfindungsgemäß weiter dadurch unterstützt, dass die äußeren Abschnitte und die inneren Abschnitte der beiden Messerflügel mit Ausnahme der Leiteinrichtungen in nur einer Ebene, nämlich der Flügelebene liegen. Die beiden inneren Abschnitte der Messerflügel grenzen unmittelbar aneinander an, insbesondere derart, dass die inneren Abschnitte der beiden Messerflügel stoffschlüssig miteinander verbunden sind. Vorzugsweise sind die beiden Messerflügel einteilig ausgeführt, so dass die beiden inneren Abschnitte zusammen einen die äußeren Abschnitte der Messerflügel verbindenden Steg bilden.

Drehzahlen von etwa 2.000 Umdrehungen je Minute reichen aus, um eine mit herkömmlichen Messern vergleichbare Schneidleistung bei verbesserter Nachzerkleinerung zu erzielen. Aufgrund der geringeren Drehzahl ist es auch nicht erforderlich und erfindungsgemäß nicht vorgesehen, eine der beiden Leiteinrichtungen nach unten abzubiegen, um das aufgewirbelte Schnittgut wieder zu Boden zu drücken. Die Möglichkeit, bei vergleichbarer Schneidleistung das Messer mit geringeren Drehzahlen zu betreiben, reduziert den Verschleiß und verlängert dadurch die Wechselintervalle der Messer in einem mit dem erfindungsgemäßen Messer ausgerüsteten Sichelmähwerk.

Eine besonders gute Sogwirkung und damit Nachzerkleinerung wird mit dem erfindungsgemäßen Messer erreicht, wenn die nach oben weisenden Oberflächen der beiden Leiteinrichtungen zusammen mindestens 14 % der Fläche der gesamten nach oben weisenden Oberfläche des Messers betragen.

Eine gute Sogwirkung und zugleich effektive Verwirbelung des Schnittgutes wird erreicht, wenn jede Leiteinrichtung einen Aufstellwinkel gegenüber der Oberfläche des Messerflügels von mindestens 30° aufweist.

Die äußeren Ränder der beiden Messerflügel unterliegen dem höchsten Verschleiß. Um dem Verschleiß entgegen zu wirken, ist es in einer Ausführungsform der Erfindung vorgesehen, dass die äußere Kante jedes Messerflügels bogenförmig verläuft. Durch den bogenförmigen Verlauf steht zusätzliches Verschleißmaterial am äußeren Rand jedes Messerflügels zur Verfügung.

Das vorstehend beschriebene, erfindungsgemäße Messer kommt vorzugsweise in einem Sichelmähwerk nach Anspruch 7 zum Einsatz. Zum Verbessern der Schneidleistung können mehrere, insbesondere zwei Messer, insbesondere in einem Vertikalabstand übereinander in einem Mähgehäuse angeordnet sein. Für eine einfache Wartung und Reinigung des Sichelmähwerks kann dieses um 90° klappbar an einem Tragarm eines Trägerfahrzeugs angeordnet sein. In einem einzelnen Mähgehäuse weisen die Messer, vorzugsweise gegenläufige Messer auf, um die Schnittgutverteilung und Nachzerkleinerung zu optimieren.

Aufgrund der erfindungsgemäßen Messer genügt es, wenn der Antrieb des Messers mit einer Drehzahl von etwa 2.000 Umdrehungen je Minute dreht. Die für die geringeren Drehzahlen erforderlichen Drehmomente werden vorzugsweise mit einem Hydraulikgetriebemotor erreicht, der ein konstant hohes Drehmoment an jedes Messer abgibt. Die geringeren Drehzahlen haben einen geringeren Verschleiß der Schneidkanten und damit längere Standzeiten der Messer zur Folge.

Nachfolgend wird die Erfindung anhand eines Ausführungsbeispiels näher erläutert.

Es zeigen:
- **Figur 1**: eine perspektivische Gesamtansicht eines erfindungsgemäßen Messers für ein Sichelmähwerk,
- **Figur 2 a**: eine Aufsicht auf das Messer nach Figur 1,

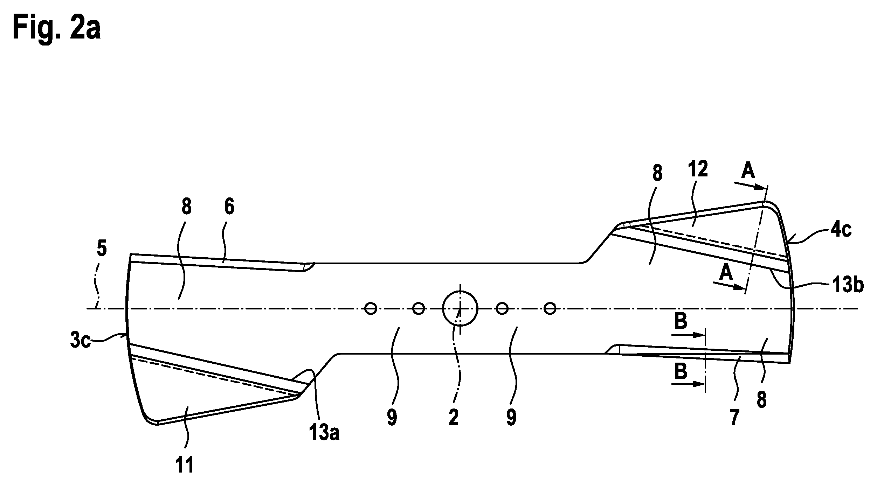

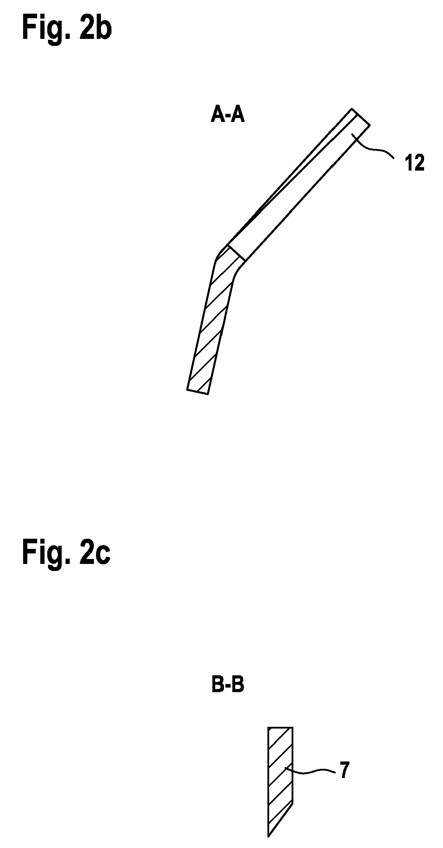

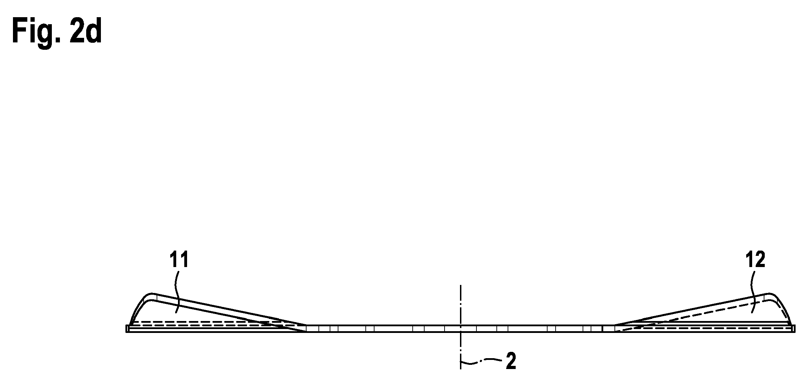

- **Figur 2 b**: eine Ansicht einer Leiteinrichtung in Richtung des Pfeils A nach Figur 2 a,
- **Figur 2 c**: eine Ansicht einer Schneide in Richtung des Pfeils B nach Figur 2 a sowie

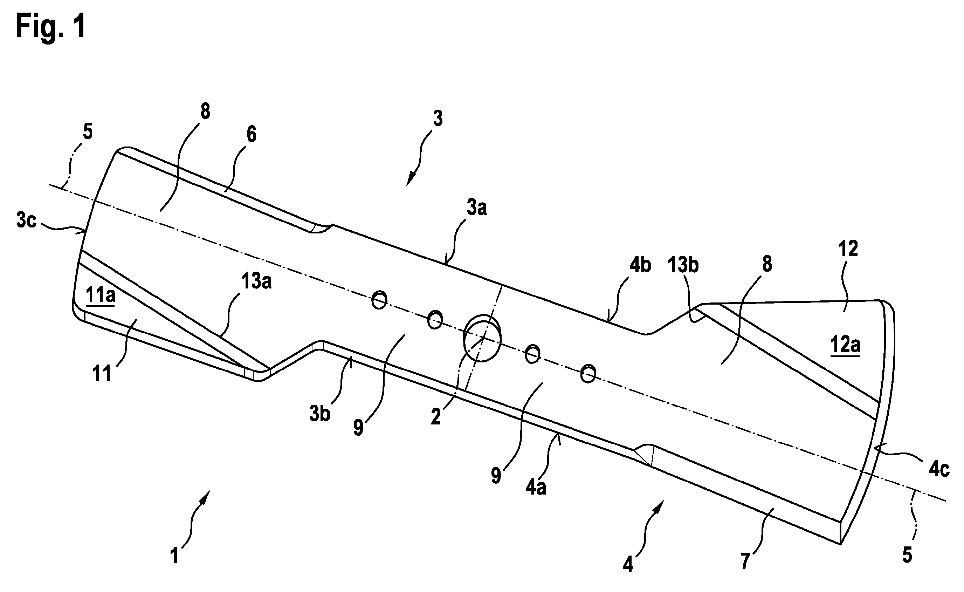

- **Figur 2 d**: eine Seitenansicht des Messers nach Figur 1.

Ein erfindungsgemäßes Messer (1) ist um eine aufrechte Rotationsachse (2) in einem in den Figuren nicht dargestellten Mähgehäuse eines Sichelmähwerks drehbar gelagert. Das Messer (1) weist zwei Messerflügel (3, 4) auf, die sich zu beiden Seiten der Rotationsachse (2) radial nach außen in Richtung einer Längsachse (5) des Messers erstrecken.

Jeder der beiden symmetrischen Messerflügel (3, 4) wird durch eine in Rotationsrichtung vordere Kante (3a, 4a), eine in Rotationsrichtung hintere Kante (3b, 4b) sowie eine die vordere und hintere Kante (3a, 3b, 4a, 4b) verbindende Außenkante (3c, 4c) begrenzt. Die in Rotationsrichtung vorderen Kanten (3a, 4a) sind über eine Teillänge zu Schneiden (6, 7) geschliffen. Die Schneiden (6, 7) liegen vollständig in einem äußeren Abschnitt (8) jedes Messerflügels (3, 4), der über seine gesamte Erstreckung in Richtung der Längsachse (5) breiter als ein an den äußeren Abschnitt (8) angrenzender innerer Abschnitt (9) jedes Messerflügels (3, 4) ist. Die beiden inneren Abschnitte (9) der Messerflügel (3,4) grenzen unmittelbar aneinander an, und zwar entlang einer senkrecht zu Längsachse (5) und zur Rotationsachse (2) verlaufenden, in Figur 1 strichpunktiert dargestellten Linie. Die beiden Messerflügel (3, 4) sind vorzugsweise einteilig ausgeführt, so dass die beiden inneren Abschnitte (9) der Messerflügel (3, 4) einen einstückigen Steg zwischen den beiden äußeren Abschnitten (8) der beiden Messerflügel (3, 4) bilden. Die beiden äußeren Abschnitte(8) und die beiden inneren Abschnitte (9) beider Messerflügel (3, 4) liegen in einer Ebene, nämlich der Flügelebene.

An der hinteren Kante (3b, 4b) jedes Messerflügels (3, 4) befindet sich eine Leiteinrichtung (11, 12). Jede Leiteinrichtung (11, 12) besteht aus einem aus der Flügelebene um eine Biegelinie (13a, b) nach oben abgebogenen Abschnitt des Messerflügels (3, 4). Die Biegelinien (13a, b) verlaufen jeweils von der Außenkante (3c, 4c) des Messerflügels (3, 4) zu dessen hinterer Kante (3b, 4b). Die nach oben weisenden Oberflächen (11a, 12a) der beiden Leiteinrichtungen (11, 12) betragen zusammen 14 % der Fläche der gesamten nach oben weisenden Oberfläche des Messers (1). Die nach oben weisende Oberfläche des Messers (1) ist diejenige Fläche des Messers, die bei ordnungsgemäßer Montage des Messers im Mähgehäuse des Sichelmähwerks von der Oberfläche des Schnittguts abgewandt ist. Um eine hinreichende Erstreckung der Leiteinrichtungen (11, 12) in Richtung der Längsachse (5) des Messers zu gewährleisten, schließt die Biegelinie (13a, 13b) jeder Leiteinrichtung (11, 12) mit der Längsachse (5) des Messers einen spitzen Winkel von 12° ein (vgl. Figur 2a).

Um eine optimale Sogwirkung für die Nachzerkleinerung des Schnittguts zu erzeugen, weisen die Leiteinrichtungen (11, 12) gegenüber der Oberfläche der Messerflügel (3, 4) einen Aufstellwinkel von 30° auf, wie dies aus Figur 2b erkennbar ist.

Eine weitere Besonderheit des erfindungsgemäßen Messers besteht darin, dass sich die Schneiden (6, 7) der symmetrisch aufgebauten Messerflügel (3, 4) ausschließlich entlang der Vorderkanten (3a, 4a) in dem jeweils äußeren Abschnitt (8) des Messerflügels (3, 4) erstrecken. Gleichzeitig stehen die Schneiden (6, 7) gegenüber dem übrigen Verlauf der vorderen Kanten (3a, 4a) etwas hervor, um die Standzeit zu verlängern. Aus Figur 2c ist erkennbar, dass die Schneiden (6, 7) an den Messerflügeln (3, 4) einen Schneidenwinkel von 30° aufweisen.

Der gebogene Verlauf der äußeren Kanten (3c, 4c) bewirkt in Verbindung mit den verbreiterten äußeren Abschnitten (8) eine längere Standzeit des Messers bei vergleichsmäßigem Verschleißverhalten.

Das beschriebene Messer erlaubt bei vergleichbarer Schnittleistung gegenüber einem herkömmlichen Messer den Betrieb des Mähwerks mit geringerer Motordrehzahl von maximal 2.500 U/Min, vorzugsweise mit 2.000 U/Min. Der Antrieb der Messer erfolgt vorzugsweise mit einem Hydraulikgetriebemotor. Der Betrieb mit niedrigeren Drehzahlen bei gleichzeitig höheren Momenten reduziert erheblich den Verschleiß des Messers und verlängert dadurch die Wechselintervalle.

**Bezugszeichenliste**

| | |
|---|---|
| 1 | Messer |
| 2 | Rotationsachse |
| 3 | Messerflügel |
| 3a | Vordere Kante |
| 3b | Hintere Kante |
| 3c | Außenkante |
| 4 | Messerflügel |
| 4a | Vordere Kante |
| 4b | Hintere Kante |
| 4c | Außenkante |
| 5 | Längsachse |
| 6 | Schneide |
| 7 | Schneide |
| 8 | Äußerer Abschnitt |
| 9 | Innerer Abschnitt |
| 10 | - |
| 11 | Leiteinrichtung |
| 11a | Oberfläche |
| 12 | Leiteinrichtung |
| 12a | Oberfläche |
| 13a | Biegelinie |
| 13b | Biegelinie |

## Patentansprüche

1. Messer (1) für ein Sichelmähwerk umfassend
- zwei um eine Rotationsachse (2) des Messers (1) rotierbare Messerflügel (3, 4), die sich zu beiden Seiten von der Rotationsachse (2) radial in Richtung einer Längsachse (5) des Messers (1) nach außen erstrecken,
- eine Schneide (6, 7) an einer in Rotationsrichtung vorderen Kante (3a, 4a) jedes Messerflügels (3, 4) und
- eine Leiteinrichtung (11, 12) an einer in Rotationsrichtung hinteren Kante (3b, 4b) jedes Messerflügels (3, 4), die aus einem aus der Flügelebene um eine Biegelinie (13 a, 13 b) abgebogenen Abschnitt des Messerflügels (3, 4) besteht, wobei die Biegelinie (13 a, 1 3b) von einer Außenkante (3 c, 4 c) des Messerflügels (3, 4) zu dessen hinterer Kante (3 b, 4 b) verläuft, wobei
- jeder Messerflügel (3, 4) einen äußeren Abschnitt (8) aufweist, der über seine gesamte Erstreckung in Richtung der Längsachse (5) des Messers breiter als ein an den äußeren Abschnitt (8) angrenzender innerer Abschnitt (9) des Messerflügels (3, 4) ist,
- die inneren Abschnitte (9) der beiden Messerflügel (3, 4) unmittelbar aneinander angrenzen,
- die die beiden Leiteinrichtungen (11, 12) bildenden Abschnitte an beiden Messerflügeln (3, 4) aus der Flügelebene nach oben abgebogen sind,
- die äußeren Abschnitte (8) und die inneren Abschnitte (9) beider Messerflügel mit Ausnahme der beiden Leiteinrichtungen (11, 12) in der Flügelebene liegen und
- die Biegelinie (13 a, 13 b) jeder der beiden Leiteinrichtung und die Längsachse (5) des Messers (1) einen spitzen Winkel in einem Bereich von 10° bis 15° einschließen,
**dadurch gekennzeichnet, dass**
- die nach oben weisenden Oberflächen (11 a, 12 a) der beiden Leiteinrichtungen (11, 12) zusammen mindestens 12 % und höchstens 20 % der Fläche der gesamten nach oben weisenden Oberfläche des Messers (1) betragen,
- sich die Schneide (6, 7) jedes Messerflügels (3, 4) ausschließlich entlang der Vorderkante (3a, 3 b) in dem äußeren Abschnitt (8) des Messerflügels (3, 4) erstreckt und
- die Biegelinie (13 a, 13 b) der Leiteinrichtung (11, 12) jedes Messerflügels (3, 4) die hintere Kante (3 b, 4 b) im äußeren Abschnitt (8) des Messerflügels (3, 4) schneidet.

2. Messer nach Anspruch 1, **dadurch gekennzeichnet, dass** jede Leiteinrichtung (11, 12) einen Aufstellwinkel gegenüber der Oberfläche des jeweiligen Messerflügels (3, 4) von mindestens 30° aufweist.

3. Messer nach Anspruch 1 oder 2, **dadurch gekennzeichnet, dass** die Schneide (6, 7) gegenüber dem übrigen Verlauf der vorderen Kante (3 a, 4 a) hervorsteht.

4. Messer nach einem der Ansprüche 1 bis 3, **dadurch gekennzeichnet, dass** die Außenkante (3 a, 4 c) jedes Messerflügels bogenförmig verläuft.

5. Sichelmähwerk mit mindestens einem in einer Betriebsstellung um eine aufrechte Rotationsachse (2) rotierend angetriebenen Messer (1) nach einem oder mehreren der Ansprüche 1 bis 4.

6. Sichelmähwerk nach Anspruch 5, **dadurch gekennzeichnet dass** mehrere Messer (1) in einem Mähgehäuse des Sichelmähwerks angeordnet sind.

7. Sichelmähwerk nach Anspruch 6, **dadurch gekennzeichnet, dass** die Messer (1) im Vertikalabstand übereinander angeordnet sind.

8. Sichelmähwerk nach einem der Ansprüche 5 bis 7, **dadurch gekennzeichnet, dass** der Antrieb des Messers (1) eine maximale Drehzahl von 2500 U/min aufweist.

9. Sichelmähwerk nach einem der Ansprüche 5 bis 8, **dadurch gekennzeichnet, dass** der Antrieb jedes Messers ein Hydraulikgetriebemotor ist.

## Claims

1. Blade (1) for a rotary mower comprising
- two cutter blades (3, 4) which are rotatable about the axis of rotation (2) of the blade (1), which extend on both sides of the axis of rotation (2) radially outwards in the direction of a longitudinal axis (5) of the blade (1),
- a cutting edge (6, 7) at a front edge (3a, 4a) of each cutter blade (3, 4) in the direction of rotation and
- a guide device (11, 12) at a rear edge (3b, 4b) of each cutter blade (3, 4) in the direction of rotation which consists of a section of the cutter blade (3, 4) bent from the blade plane about a bending line (13a, 13b), wherein the bending line (13a, 13b) runs from an outer edge (3c, 4c) of the cutter blade (3, 4) to the rear edge (3b, 4b) thereof, wherein
- each cutter blade (3, 4) has an outer section (8) which over its entire extension in the direction of the longitudinal axis (5) of the blade is broader than an inner section (9) of the cutter blade (3, 4) adjoining the outer section (8),
- the inner sections (9) of the two cutter blades (3, 4) directly adjoin one another,
- the sections on both cutter blades (3, 4) forming the two guide devices (11, 12) are bent upwards from the blade plane,
- the outer sections (8) and the inner sections (9) of both cutter blades except for the two guiding devices (11, 12) lie in the blade plane and
- the bending line (13a, 13b) of each of the two guiding devices and the longitudinal axis (5) of the blade (1) enclose an acute angle in a range from 10° to 15°,
**characterized in that**
- the upwardly pointing surfaces (11a, 12a) of the two guiding devices (11, 12) together account for at least 12 % and at most 20 % of the area of the entire upwardly pointing surface of the blade (1),
- the cutting edge (6, 7) of each cutter blade (3, 4) extends exclusively along the front edge (3a, 3b) in the outer section (8) of the cutter blade (3, 4) and
- the bending line (13a, 13b) of the guide device (11, 12) of each cutter blade (3, 4) intersects the rear edge (3b, 4b) in the outer edge (8) of the cutter blade (3, 4).

2. The blade according to claim 1, **characterized in that** each guide device (11, 12) has an installation angle of at least 30° with respect to the surface of the respective cutter blade (3, 4).

3. The blade according to claim 1 or 2, **characterized in that** the cutting edge (6, 7) protrudes with respect to the remaining course of the front edge (3a, 4a).

4. The blade according to any one of claims 1 to 3, **characterized in that** the outer edge (3a, 4c) of each cutter blade runs in an arcuate manner.

5. Rotary mower having at least one blade (1) driven in a rotating manner in an operating position about an upright axis of rotation (2) according to one or more of claims 1 to 4.

6. The rotary mower according to claim 5, **characterized in that** a plurality of blades (1) are arranged in a mower housing of the rotary mower.

7. The rotary mower according to claim 6, **characterized in that** the blades (1) are arranged above one another in vertical spacing.

8. The rotary mower according to any one of claims 5 to 7, **characterized in that** the drive of the blade (1) has a maximum rotational speed of 2,500 rpm.

9. The rotary mower according to any one of claims 5 to 8, **characterized in that** the drive of each blade is a hydraulic transmission motor.

## Revendications

1. Lame (1) pour une faucheuse, comprenant
- deux ailettes (3, 4) de lame rotatives autour d'un axe de rotation (2) de la lame (1) qui s'étendent vers l'extérieur, vers les deux côtés de l'axe de rotation (2), radialement en direction d'un axe longitudinal (5) de la lame (1),
- un tranchant (6, 7) sur une arête avant (3a, 4a) dans le sens de rotation de chaque ailette (3, 4) de lame et
- un système de guidage (11, 12) sur une arête arrière (3b, 4b) dans le sens de rotation de chaque ailette (3, 4) de lame qui est constitué d'un segment de l'ailette (3, 4) de lame recourbé hors du plan d'ailette autour d'une courbe de flexion (13a, 13b), la courbe de flexion (13a, 13b) s'étendant d'une arête extérieure (3c, 4c) de l'ailette (3, 4) de lame vers l'arête arrière (3b, 4b) de celle-ci,
- chaque ailette (3, 4) de lame comportant un segment extérieur (8), qui sur l'ensemble de son extension en direction de l'axe longitudinal (5) de la lame est plus large qu'un segment (9) intérieur de l'ailette (3, 4) de lame qui est adjacent au segment (8) extérieur,
- les segments intérieurs (9) des deux ailettes (3, 4) de lame étant directement adjacents l'un à l'autre,
- sur les deux ailettes (3, 4) de lame, les segments formant les deux systèmes de guidage (11, 12) étant recourbés vers le haut hors du plan d'ailette,
- les segments extérieurs (8) et les segments intérieurs (9) des deux ailettes de lame, à l'exception des deux systèmes de guidage (11, 12) se situant dans le plan d'ailette et
- la courbe de flexion (13a, 13b) de chacun des deux systèmes de guidage et l'axe longitudinal (5) de la lame (1) incluant un angle aigu dans un ordre de 10° à 15°
**caractérisée en ce que**
- les surfaces (11a, 12a) dirigées vers le haut des deux systèmes de guidage (11, 12) correspondent ensemble à au moins 12 % et à au maximum 20 % de la surface de l'ensemble de la face supérieure dirigée vers le haut de la lame (1),
- le tranchant (6, 7) de chaque ailette (3, 4) de lame s'étend exclusivement le long de l'arête avant (3a, 3b) dans le segment extérieur (8) des ailettes (3, 4) de lame et
- la courbe de flexion (13a, 13b) du système de guidage (11, 12) de chaque ailette (3, 4) de lame recoupe l'arête arrière (3b, 4b) dans le segment extérieur (8) de l'ailette (3, 4) de lame.

2. Lame selon la revendication 1, **caractérisée en ce que** chaque système de guidage (11, 12) présente un angle de positionnement d'au moins 30° par rapport à la face supérieure de l'ailette (3, 4) de lame concernée.

3. Lame selon la revendication 1 ou 2, **caractérisée en ce que** le tranchant (6, 7) est débordant par rapport au tracé restant de l'arête avant (3a, 4a).

4. Lame selon l'une quelconque des revendications 1 à 3, **caractérisée en ce que** l'arête extérieure (3a, 4a) de chaque ailette de lame s'étend sous forme curviligne.

5. Faucheuse avec au moins une lame (1) selon l'une quelconque ou plusieurs des revendications 1 à 4 entraînée en rotation, en position de service autour d'un axe de rotation (2) debout.

6. Faucheuse selon la revendication 5, **caractérisée en ce que** plusieurs lames (1) sont placées dans un carter de coupe de la faucheuse.

7. Faucheuse selon la revendication 6, **caractérisée en ce que** les lames (1) sont placées en étant superposées les une aux autres avec un écart vertical.

8. Faucheuse selon l'une quelconque des revendications 5 à 7, **caractérisée en ce que** l'entraînement de la lame (1) fait preuve d'une vitesse de rotation maximale de 2500 t/m.

9. Faucheuse selon l'une quelconque des revendications 5 à 8, **caractérisée en ce que** l'entraînement de chaque lame est un motoréducteur hydraulique.
